# EUROPEAN PATENT APPLICATION

(11) **EP 4 831 232 A1**
(43) Date of publication of application: **28.10.2026**
(21) Application number: 25172606.3
(22) Date of filing: 25.04.2025
(51) Int. Cl.: C08L 23/00, C08L 95/00, C09J 7/38, C09J 195/00, E04D 5/10, B32B 11/00, B32B 11/02, B32B 11/04, B32B 11/06, B32B 27/32

(54) **MULTILAMINATE WATERPROOFING MEMBRANE**

(71) Applicant: Henkel AG & Co. KGaA, 40589 Düsseldorf (DE)
(72) Inventor: Manuel, David J, 70300 Negeri Sembilan (MY); Rabajante Bernabe, Jonathan, 9506 Koronadal City (PH)

(57) **Abstract**

A multilaminate waterproofing membrane comprising:
a release liner having an interior surface and an exterior surface, said exterior surface of the release liner providing a first exterior surface of the waterproofing membrane;
a protective surface film having an interior surface and an exterior surface, said exterior surface of the protective surfacing film providing a second exterior surface of the waterproofing membrane;
an adhesive lamina disposed on the interior surface said release liner, said adhesive lamina comprising:
a) bitumen;
b) rubber crumb;
c) at least one elastomer;
d) plasticizer; and,
optionally e) filler.
a first barrier film disposed on said adhesive lamina; and,
a first modified bitumen lamina interposed between said first barrier film and said interior surface of the protective surfacing film.

## Description

### FIELD OF THE INVENTION

The present disclosure is directed to a multilaminate waterproofing membrane. More particularly, the present disclosure is directed to a multilaminate waterproofing membrane which is adherable to a substrate surface via an adhesive lamina which comprises: a) bitumen; b) rubber crumb; c) at least one elastomer; d) plasticizer; and, optionally e) filler.

### BACKGROUND OF THE INVENTION

Sheet-like waterproofing membranes are well-known for application to concrete and other building and construction substrates, such as roofs and foundations. These waterproofing membranes are typically laminates which include at least: a carrier sheet; a pressure sensitive adhesive layer; and, a release liner. The release liner is used to prevent the adhesive portion of the membrane from adhering to the carrier sheet or other portion of the membrane when the membrane is rolled up for storage and transport: the release liner must be removed from the membrane prior to or during installation.

The pressure sensitive adhesive layer of a waterproofing membrane should desirably demonstrate the following characteristics: a resistance to flow at temperatures up to 120°C without the need for internal reinforcement of the adhesive; excellent adhesion over a broad temperature range; and, resistance to cracking at temperatures as low as -30°C. Moreover, when the adhesive lamina is cast from a molten composition, that composition should demonstrate a low viscosity at mixing and application (*coating*) temperatures - typically from 150 to 200°C - to permit facile manufacturing of the membranes.

Bitumen is a common constituent of the adhesive laminae of waterproofing membranes and thus of the compositions from which such laminae are case. It is noted that bitumen itself does not exhibit pressure sensitive adhesive properties, is brittle at low temperatures and exhibits excessive flow at high temperatures. Thus additives - such as elastomers, plasticizers and thermoplastic polymers - are usually blended with bitumen to try to achieve the aforementioned characteristics. Problematically, the addition of such additives tends to ameliorate one property of bitumen whilst compromising at least one other performance characteristic.

US Patent No. 7,317,045 (Zanchetta et al.) describes a modified bitumen composition for roofing application comprising: a polymer modifier consisting essentially of polyethylene; and, asphalt, wherein the polyethylene consists of a mixture of high density polyethylene and low density polyethylene in a ratio ranging from 4:1 to 1:4 LDPE to HDPE by weight, wherein the polyethylene is linear.

US Patent No. 8,298,661 B2 (Samanta et al.) discloses a waterproofing membrane in the form of a sheet-like laminate which comprises a carrier support layer and an adhesive layer. The adhesive layer of the laminate comprises a pressure sensitive bitumen composition comprising: bitumen; synthetic rubber; high density polyethylene; ground vulcanized crumb rubber; and, optionally, a plasticizer. The ground vulcanized crumb rubber constitutes approximately 10 wt.% of the adhesive layer: at such a loading, the adhesive layer *per se* demonstrates poor adhesion to low and medium surface energy substrates. Further, upon coating of the adhesive composition onto the carrier support layer to form the membrane, the adhesive composition has a high processing viscosity on account of the crumb rubber loading, rendering it difficult to handle.

US Patent No. 10,138,633 B2 (Khan et al.) discloses a building underlayment sheet comprising: an underlayment lamina having a top surface and a bottom surface, wherein the bottom surface includes an interior portion and a selvage portion that extends from the interior portion of the bottom surface to a terminal distal edge of the sheet, wherein the interior portion of the bottom surface bears a self-adhesive layer, and the selvage portion of the bottom surface bears a bonding composition that is capable of bonding to a top surface of a second underlayment lamina to form a full lap joint. The lamina is composed of a material selected from a non-woven material, a woven material, a saturated felt, a porous material, a non-porous material, and a polymer. The self-adhesive layer comprises an asphalt, polymer, a tackifier and optionally a filler. The bonding composition comprises asphalt, poly(styrene-butadiene-styrene), ground tire rubber (GTR), a tackifier and optionally a filler. It is considered that the bonding composition demonstrates poor adhesion to low and medium surface energy substrates.

There is considered to remain a need in the art to provide a waterproofing membrane which demonstrates adhesion to low surface energy substrates over a broad practicable temperature range. Further, it would be desirable to provide a membrane which contains a high proportion of recycled or repurposed materials but of which the adhesive layer can be obtained from an adhesive composition having a workable viscosity.

### STATEMENT OF THE INVENTION

In accordance with a first aspect of the present disclosure, there is provided a multilaminate waterproofing membrane comprising:
a release liner having an interior surface and an exterior surface, said exterior surface of the release liner providing a first exterior surface of the waterproofing membrane;
a protective surface film having an interior surface and an exterior surface, said exterior surface of the protective surfacing film providing a second exterior surface of the waterproofing membrane;
an adhesive lamina disposed on the interior surface said release liner, said adhesive lamina comprising:
   a) bitumen;
   b) rubber crumb;
   c) at least one elastomer;
   d) plasticizer; and,
   optionally e) filler,
a first barrier film disposed on said adhesive lamina; and,
a first modified bitumen lamina interposed between said first barrier film and said interior surface of the protective surfacing film.

In an exemplification, the multilaminate waterproofing membrane comprises:
a release liner having an interior surface and an exterior surface, said exterior surface of the release liner providing a first exterior surface of the waterproofing membrane;
a protective surface film having an interior surface and an exterior surface, said exterior surface of the protective surfacing film providing a second exterior surface of the waterproofing membrane;
an adhesive lamina disposed on the interior surface said release liner, said adhesive lamina comprising:
   a) bitumen;
   b) rubber crumb;
   c) at least one elastomer;
   d) plasticizer; and,
   optionally e) filler,
a first barrier film disposed on said adhesive lamina;
a first modified bitumen lamina disposed on said first barrier film;
a second barrier film disposed on said first modified bitumen lamina; and,
a second modified bitumen lamina interposed between said second barrier film and said interior surface of the protective surfacing film.

The multilaminate waterproofing membrane is preferably characterized by at least one of the following: a total thickness of from 1 to 10 mm; a penetration resistance of at least 25 dmm (*decimillimeter*), as determined at 25°C in accordance with ASTM D5-06; and, a puncture resistance of at least 200 Newtons, as determined in accordance with European Standard DIN EN 388.

**It** is preferred that the release liner of the membrane has a thickness of from 20 to 120 microns and comprises at least one material chosen from: polyethylene; polypropylene; polyesters; cellulose acetate; polyvinylchloride; polyvinylidene fluoride; and, paper. Independently of, or additional to this preference for the release liner, it is preferred that the protective surface film of the membrane has a thickness of from 50 to 100 microns and comprises at least one material chosen from: polymeric films; metal foils; foams; non-woven fabric; woven fabric; and, mixtures thereof.

In important embodiments, the adhesive lamina is cast or otherwise obtained from a hot-melt adhesive composition (AC) comprising, based on the weight of the composition: from 40 to 80 wt.% of a) said bitumen; from 0.1 to 10 wt.% of b) said rubber crumb; from 1 to 15 wt.% of c) said at least one elastomer; from 1 to 20 wt.% of d) said plasticizer; and, from 0 to 30 wt.% of e) said filler.

More particularly, said adhesive lamina is cast or otherwise obtained from a hot-melt adhesive composition (AC) comprising, based on the weight of the composition: from 50 to 80 wt.%, preferably from 55 to 75 wt.% of a) said bitumen; from 0.1 to 5 wt.%, preferably from 0.1 to 3 wt.% of b) said rubber crumb; from 2 to 15 wt.%, preferably from 2 to 10 wt.% of c) said at least one elastomer; from 5 to 20 wt.%, preferably from 5 to 15 wt.% of d) said plasticizer; and, from 5 to 30 wt.%, preferably from 10 to 25 wt.% of e) said filler.

In exemplary embodiments of the adhesive lamina: constituent a) said bitumen has a penetration value of from 20 to 350 dmm (*decimillimeter*) as determined at 25°C in accordance with ASTM D-5; constituent c) said at least one elastomer is chosen from styrene-isoprene-styrene block copolymers, styrene-butadiene-styrene linear block copolymers, styrene-butadiene linear diblock copolymers, styrene-butadiene radial block copolymers, and blends thereof; constituent d) said plasticizer comprises mineral oil having a flash point of from 180 to 380°C and a viscosity of from 50 to 2000 mPa.s, as determined at 25°C in accordance with ASTM D445-24; and / or, constituent d) said plasticizer of the adhesive lamina comprises vegetable oil having a flash point of at least 330°C and a viscosity of from 30 to 100 mPa.s, as determined at 25°C in accordance with ASTM D445-24.

**It** is preferred that the or each modified bituminous lamina of the multilaminate membrane comprises: i) bitumen; ii) rubber crumb; iii) at least one elastomer; iv) at least one plastomer; v) plasticizer; and, optionally vi) filler.

More particularly, it is preferred that the or each modified bituminous lamina of the multilaminate membrane is cast or otherwise obtained from a hot-melt composition (MB) comprising, based on the weight of the composition: from 40 to 80 wt.% of i) said bitumen; from 0.1 to 15 wt.% of ii) said rubber crumb; from 1 to 15 wt.% of iii) said at least one elastomer; from 1 to 15 wt.% of iv) said at least one plastomer; from 1 to 20 wt.% of v) said plasticizer; and, from 0 to 30 wt.% of vi) said filler.

For example, the or each modified bituminous lamina may be cast or otherwise obtained from a hot-melt composition (MB) comprising, based on the weight of the composition: from 40 to 75 wt.%, preferably from 45 to 60 wt.% of i) said bitumen; from 0.5 to 15 wt.%, preferably from 5 to 15 wt.% of ii) said rubber crumb; from 1 to 10 wt.%, preferably from 1 to 5 wt.% of iii) said at least one elastomer; from 1 to 10 wt.%, preferably from 1 to 5 wt.% of iv) said at least one plastomer; from 1 to 15 wt.%, preferably from 1 to 10 wt.% of v) said plasticizer; and, from 5 to 30 wt.%, preferably from 10 to 30 wt.% of vi) said filler.

In exemplary embodiments of the modified bituminous lamina: constituent i) said bitumen has a penetration value of from 20 to 350 dmm as determined at 25°C in accordance with ASTM D-5; constituent iii) said at least one elastomer is chosen from styrene-isoprene-styrene block copolymers, styrene-butadiene-styrene linear block copolymers, styrene-butadiene linear diblock copolymers, styrene-butadiene radial block copolymers and mixtures thereof; constituent v) said plasticizer comprises mineral oil having a flash point of from 180 to 380°C and a viscosity of from 50 to 2000 mPa.s, as determined at 25°C in accordance with ASTM D445-24; and / or, constituent v) said plasticizer comprises vegetable oil having a flash point of at least 330°C and a viscosity of from 30 to 100 mPa.s, as determined at 25°C in accordance with ASTM D445-24.

In further exemplary embodiments of the modified bituminous lamina constituent iv) said at least one plastomer is characterized by at least one of: a weight average molecular weight of from 5000 to 50000 daltons; a melt flow index of at least 50 dg/min, as determined in accordance with ASTM D1238-10; and, a density of from 0.85 to 1.05 g/cm³. Independently of, or additional to this characterization, it is preferred that constituent iv) of the modified bituminous lamina comprises or consists of at least one copolymer of ethylene with a C₄-C₈ alpha-olefin, wherein said C₄-C₈ alpha-olefin constitutes from 5 to 30 mole percent of the copolymer.

In accordance with a second aspect of the present disclosure there is provided the use in a multilaminate waterproofing membrane of an adhesive lamina, wherein said adhesive lamina is obtained from a hot-melt adhesive composition (AC) comprising, based on the weight of the composition: from 40 to 80 wt.% of a) bitumen; from 0.1 to 10 wt.% of b) rubber crumb; from 1 to 15 wt.% of c) at least one elastomer; from 1 to 20 wt.% of d) plasticizer; and, from 0 to 30 wt.% of e) filler.

Where the aspects of the disclosure are described above as having certain embodiments, any one or more of those embodiments can be implemented in or combined with any one of the further embodiments, even if that combination is not explicitly described. Expressed differently, the described embodiments are not mutually exclusive, and permutations thereof remain within the scope of this disclosure.

### DEFINITIONS

The terms *"comprising", "comprises"* and *"comprised* of' as used herein are synonymous with *"including", "includes", "containing"* or *"contains",* and are inclusive or open-ended and do not exclude additional, non-recited members, elements or method steps.

As used herein, the term *"consisting of"* excludes any element, ingredient, member or method step not specified. For completeness, the term *"comprising"* encompasses *"consisting of'.*

The words *"preferred", "preferably", "desirably"* and *"particularly"* are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

The word *"exemplary"* is used herein to mean serving as an example, instance, or illustration. Any aspect or design described herein as *"exemplary"* is not necessarily to be construed as preferred or advantageous over other aspects or designs. Rather, use of the word exemplary is intended to present concepts in a concrete fashion.

As used throughout this application, the word *"may"* is used in a permissive sense - that is meaning to have the potential to - rather than in the mandatory sense.

Spatially relative terms, such as *"interior", "exterior", "top", "back", "above", "below", "left", "right"* and the like may be applicable herein to describe an component's relationship to another component(s) as illustrated in the figures. Obviously all such spatially relative terms refer to the orientation shown in the figures only for ease of illustration and are not necessarily limiting given that an assembly can assume orientations and configurations different from those illustrated in the figures when in use.

The term *"disposed on"* as used herein encompasses *"mounted on", "placed on", "positioned on", "supported by", "attached to"* and *"connected to",* either directly or indirectly. In a multilaminate structure, where a first lamina is disposed on a second lamina, this encompasses both of: the first lamina being disposed on and in direct contact with the second lamina; and, the first lamina being disposed indirectly on the second lamina whereby one or more further structural components - such as but not limited to laminae - may be at least partially interposed between the first and second laminae.

The term *"plurality"* as used herein is defined as two or more than two.

When amounts, concentrations, dimensions and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

Further, in accordance with standard understanding, a weight range represented as being *"from 0 to x"* specifically includes 0 wt.%: the ingredient defined by said range may be absent from the material or may be present in the material in an amount up to x wt.%.

As used herein, room temperature is 23°C plus or minus 2°C. As used herein, *"ambient conditions"* means the temperature and pressure of the surroundings in which the curable film is located or in which a coating layer or the substrate for said coating layer is located.

The term *"liquid"* herein means in a liquid state at room temperature and at atmospheric pressure. Analogously, the term *"solid"* means in a solid state at room temperature and at atmospheric pressure. Solid state is defined as the state of matter in which materials are not fluid but retain their boundaries without support, the atoms or molecules occupying fixed positions with respect to each other and unable to move freely.

The molecular weights referred to in this specification can be determined with gel permeation chromatography (GPC) using polystyrene calibration standards, such as is done according to ASTM 3536.

Viscosities of the coating compositions described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the liquid compositions are done using the No. 6 spindle at a speed of 20 revolutions per minute for 1 minute until the viscometer equilibrates. The viscosity corresponding to the equilibrium reading is then calculated using the calibration.

Unless otherwise stated, the term *"particle size"* refers to the largest axis of the particle. In the case of a generally spherical particle, the largest axis is the diameter.

The term *"median volume particle size" (Dv50),* as used herein, refers to a particle size corresponding to 50% of the volume of the sampled particles being greater than and 50% of the volume of the sampled particles being smaller than the recited Dv50 value. Median volume particle size is determined herein by laser diffraction using Anton Paar Particle Size Analyzer (PSA) 1190.

The term *"hot-melt"* as used herein describes a composition that is substantially non-flowable at room temperature, but converts to a flowable state at an elevated, application temperature of, for example, from 100° to 160°C. The composition of the present invention does, however, demonstrate *"cold flow"* which herein refers to the distortion or viscous flow of the composition at room temperature under applied pressure, especially finger pressure. The composition does not exhibit a liquid to solid transition and generally does not return to its original dimensions when the pressure is removed.

The term *"softening point"* as used herein refers to the temperature at which a material, such as a polymer, loses its solid characteristics and becomes relatively fluid. A material's softening point as given herein is that temperature measured using the standard ball and ring method according to ISO 4625-1: 2004 or ASTM36-0: Standard Test Method for Softening Point of Bitumen (Ring-and-Ball Apparatus) where applicable.

The term *"polymer"* as used herein, refers to a compound prepared by polymerizing monomers, whether of the same or a different type, that in polymerized form provide the recurring units that make up a polymer. The generic term *"polymer"* thus embraces both homopolymers and copolymers. The term *"copolymer"* as used herein is intended to specifically denote a polymer having two or more different monomer units. The copolymer may, in certain embodiments, be a terpolymer with three or more different monomer units, or have four or more different monomer units. Further, copolymers of the present disclosure may be a random copolymer, a gradient copolymer, or a block copolymer formed by a controlled polymerization process.

The term *"elastomer"* is intended herein to designate a true elastomer or a polymer resin serving as a base constituent for obtaining a true elastomer. True elastomers are defined by the ASTM Special Technical Bulletin, No. 184 Standard as being materials which are capable of being stretched, at room temperature, to twice their intrinsic length and which, once they have been released after holding them under tension for 5 minutes, return to within 10 % of their initial length in the same time. For completeness, the term *"elastomer"* is intended to encompass: diene elastomers; non-diene elastomers; and, thermoplastic elastomers.

The term *"rubber"* as used herein means natural rubber and synthetic rubbers: it is intended to encompass vulcanized rubbers and to further encompass balata, gutta-percha, guayule, chicle and similar natural gums.

The term *"plastomer"* is used herein to refer to a category of polymers which demonstrate both plasticity and elasticity and, as such, are distinguished from elastomers which do not demonstrate plasticity.

The term *"mineral oil"* is used herein in accordance with its standard definition as a liquid mixture of hydrocarbons obtained from petroleum either by intensive treatment with sulphuric acid and oleum, by hydrogenation, or by a combination thereof, and which consists predominantly of saturated C₁₅-C₅₀ hydrocarbons.

The term *"substituted"* refers to substitution with at least one suitable substituent. For completeness: the substituents may connect to the specified group or moiety at one or more positions; and, multiple degrees of substitution are allowed unless otherwise stated. Further, the terms *"substitution"* or *"substituted with"* include the implicit proviso that such substitution is in accordance with permitted valence of the substituted atom and the substituent, and that the substitution results in a stable compound that does not spontaneously undergo transformation by, for instance, rearrangement, cyclization or elimination.

The term *"substantially free"* is intended to mean that the constituent, component, compound, moiety, functional group, element, ion or the like is not deliberately added to the subject material and is present, at most, in only trace amounts which will have no (adverse) effect on the desired properties of the material. As regards compositions, an exemplary trace amount is less than 1000 ppm by weight of the composition. The term *"substantially free"* encompasses those embodiments where the specified compound, moiety, functional group, element, ion, or other like component is completely absent from the subject material or is not present in any amount measurable by techniques generally used in the art.

The term *"anhydrous"* as used herein has equivalence to the term *"substantially free of water".* Water is not deliberately added to a given composition and is present, at most, in only trace amounts which will have no (adverse) effect on the desired properties of the composition.

### BRIEF DESCRIPTION OF THE DRAWINGS

Various other objects, advantages, and features of the disclosure will become apparent to those skill in the art from the following discussion taken in conjunction with the appended drawings, in which:
Fig. 1 illustrates a waterproofing membrane in accordance with a first embodiment of the present disclosure; and,
Fig. 2 illustrates a waterproofing membrane in accordance with a second embodiment of the present disclosure.

### DETAILED DESCRIPTION OF THE INVENTION

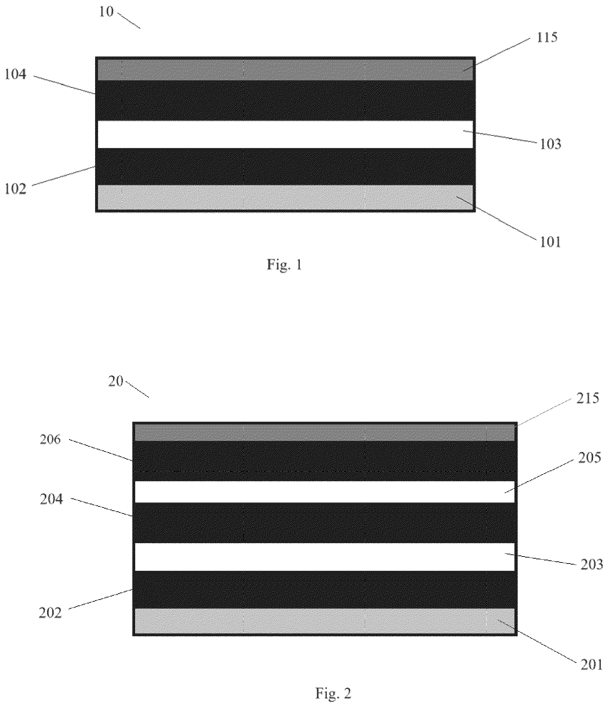

Figure 1 appended hereto depicts an exemplary multilaminate waterproofing membrane (10) which comprises five lamina. The membrane (10) is provided with a release liner (101) on which is disposed an adhesive lamina (102). Interposed between the adhesive lamina (102) and a modified bituminous lamina (104) is a first barrier film (103). A protective surfacing film (115) provides that exterior lamina of the membrane (10) which is disposed on the opposite side thereof to the release liner (101).

In an alternative embodiment which is illustrated in Figure 2, the multilaminate waterproofing membrane (20) comprise seven lamina. The membrane (20) is similarly provided with a release liner (201) and a protective surfacing film (215) disposed on opposite sides of the membrane (20). Further, the multilaminate waterproofing membrane (20) comprises an adhesive lamina (202) disposed on the release liner (202). However, the membrane (20) is provided with first and second modified bituminous lamina (204, 206); further a first barrier film (203) is interposed between the adhesive lamina (202) and the first modified bituminous lamina (204) and a second barrier film (205) is interposed between the respective bituminous laminae (204, 206). The first and second modified bituminous lamina (204, 206) may have the same or different composition and, independently of said composition, may possess the same or different configuration, wherein configuration includes thickness and orientation of the lamina. Similarly, the first barrier film (203) and the second barrier film (205) may have the same or different composition and, independently of said composition, may possess the same or different configuration.

The compositions of the adhesive laminae (102, 202) and of the modified bituminous laminae (104, 204, 206) will be discussed in detail hereinbelow.

As used herein, the term *"release liner"* refers to a thin flexible sheet which, after being placed in intimate contact with an adhesive surface may be subsequently removed without damaging the adhesive. Illustrative materials of which the release liner (101, 201) may comprise or consist include: polyethylene; polypropylene; polyesters, such as polyethylene terephthalate (PET) and polybutylene terephthalate (PBT); cellulose acetate; polyvinylchloride; polyvinylidene fluoride; and, paper substrates coated or laminated with the aforementioned thermoplastics. For completeness, the coated papers or thermoplastic materials are often siliconized or otherwise treated with a release agent to impart improved release characteristics.

**It** will be typical for the release liner (101, 201) to have a thickness of from 20 to 120 microns, for instance from 25 to 110 microns. The constituent material may however be determinative of the optimal thickness of the release liner (101, 201). For example, a release liner consisting of a siliconized release polypropylene film might have a thickness of from 20 to 50 microns, for instance from 25 to 40 microns. A release liner consisting of a siliconized release paper film might have a thickness of from 40 to 120 microns, for instance from 50 to 110 microns.

As is known in the art, release liners are typically left in place for storage and transport of the membranes (10, 20) and only removed when a bonding operation is to be performed. The release liners thereby perform a number of functions, including preventing contamination of the composition, facilitating handling thereof, providing support thereto and providing for the conveyance of information or identifying data.

As used herein, the term *"barrier film"* refers to a flexible material onto which the adhesive lamina (102, 103) can be disposed and which serves to stabilize that adhesive lamina. The barrier film (103, 203) differs from the release liner (101, 201) discussed herein above in that it cannot be removed from the adhesive lamina (102, 202) without deleteriously effecting the integrity of that lamina.

Herein, the barrier film (203) or films (203, 205) add thickness to the membrane (10, 20) so as to improve the handling thereof. The or each barrier film (203, 205) may be constituted by a single lamina or a plurality of lamina but should typically possess *in toto* a thickness of from 0.01 to 0.75 mm, for example from 0.05 to 0.50 mm. Independently of, or additional to this thickness characterization, it is preferred that the barrier films possess a weight per unit area of from 50 to 300 g/m², for instance from 50 to 100 g/m².

The barrier film may conventionally be constituted by one or more of polymeric films, metal foils, foams, non-woven fabric, woven fabric or combinations thereof. Exemplary polymeric films include but are not limited to: polyolefins, such as thermoplastic polyolefins, polyethylene, polypropylene and polyethylene-polypropylene copolymers; polyesters, such as polyethylene terephthalate (PET) or polybutylene terephthalate (PBT); polyvinylchloride (PVC); poly(ethylene vinyl acetate); polyamides, such as nylon; and, combinations thereof. Exemplary non-woven and woven fabrics may conventionally comprise polyethylene, polypropylene, polyethylene terephthalate, glass and / or polyamide fibers.

It is not precluded herein that polymer film- or extrusion-coated woven or non-woven fabrics may be used as a barrier film: coatings on one or both sides of the woven or non-woven fabrics may be used and, in the latter instance, the coatings on each side of the fabric may be the same or different. **It** is also not precluded that polymer-impregnated woven and non-woven fabrics may have utility as a barrier film of the waterproofing membrane (10, 20).

In certain embodiments a non-skid coating layer (*not shown*) may be interposed between a given barrier film (103, 203, 205) and a modified bituminous lamina (104, 204, 206). When present, the or each non-skid coating layer should have a thickness of from 0.01 to 0.20 mm, for example from 0.01 to 0.15 mm. Independently of or additional to this thickness condition, the or each non-skid coating layer may be embossed to provide supplementary skid resistance. Exemplary polymers of which non-skid coating layers may be constituted include: polyolefins, such as amorphous polyolefins, atactic polypropylene, ethylene-propylene copolymers and polyolefin plastomers; and, poly(ethylene-vinyl acetate) (PEVA).

The protective surfacing film (115, 215) of the waterproofing membrane should be constituted by a flexible material onto which the modified bituminous lamina (104, 106) can be disposed and which serves to stabilize that lamina. The protective surfacing film (115, 215) differs from the release liner (101, 201) discussed herein above in that it cannot be removed from the modified bituminous lamina (104, 106) without deleteriously effecting the integrity of that lamina.

Herein, the protective surfacing film (115, 215) may be constituted by a single lamina or a plurality of lamina but should typically possess *in toto* a thickness of from 50 to 100 microns, for example from 75 to 100 microns.

The composition of the protective surfacing film (115, 215) of the waterproofing membrane is not particularly limited but should typically be chosen to meet or provide at least one of the following properties: a puncture resistance of at least 200 Newtons, as determined in accordance with European Standard DIN EN 388; and, static and kinetic coefficients of friction of at least 0.7 as determined in accordance with ASTM D1894: Standard Test Method for Static and Kinetic Coefficients of Friction of Plastic Film and Sheeting and, where applicable, as measured in both machine direction and cross direction. These properties are not mutually exclusive and a given protective surfacing film (115, 215) may exhibit one or both thereof. Independently of or additional to meeting these properties, the protective surfacing film (115, 215) should typically consist of a fire rated approved material complying to ASTM E108.

The protective surfacing film (115, 215) may conventionally be constituted by at least one material chosen from: polymeric films; metal foils; foams; non-woven fabric; woven fabric; and, mixtures thereof. Exemplary polymeric films having utility as the protective surfacing film (115, 215), in either a cross-laminated or non-cross-laminated configuration, include but are not limited to: polyolefins, such as thermoplastic polyolefins, polyethylene, polypropylene and polyethylene-polypropylene copolymers; polyesters, such as polyethylene terephthalate (PET) or polybutylene terephthalate (PBT); polyvinylchloride (PVC); poly(ethylene vinyl acetate); polyamides, such as nylon; and, combinations thereof. Exemplary non-woven and woven fabrics may conventionally comprise polyethylene, polypropylene, polyethylene terephthalate, glass and / or polyamide fibers. A preference may be noted for the use of high density polyethylene (HDPE) films and in particular cross-laminated high density polyethylene (HDPE) films in or as the protective surfacing film (115, 215).

The multilaminate waterproofing membranes are constructed by lamination of the respective layers. There is no particular intention to limit the means by which such lamination is performed and indeed more than one lamination method may be utilized to form a given membrane. However, exemplary lamination methods having utility in the present disclosure include: hot-roll lamination; dry lamination; extrusion lamination; and, coating methods. Coating methods may in particular be applicable to the disposal of the adhesive lamina (102, 202) and the modified bituminous laminae (104, 204, 206) within the multilaminate structure.

Independently of the number of lamina of which the waterproofing membrane consists, the membrane of the present disclosure should be characterized by at least one of the following: a total thickness of from 1 to 10 mm; a penetration resistance of at least 25 dmm, for example from 25 to 85 dmm, as determined at 25°C in accordance with ASTM D5-06: Standard Test Method for Penetration of Bituminous Materials; and, a puncture resistance of at least 200 Newtons, as determined in accordance with European Standard DIN EN 388. These properties are not mutually exclusive and a given membrane may exhibit one, two or three thereof.

There is no particular intention to limit the width or length of the waterproofing membranes of the present disclosure. Typically, however, the membranes (10, 20) will have a width of from 0.01 to 10 metres, for example a width of from 0.1 to 10 m. Independently of or additional to this width characterization, the membranes (10, 20) may have a length of from 0.01 to 100 metres, for example from 1 to 25 metres or from 5 to 25 metres. In the configurations depicted in Figures 1 and 2, the adhesive lamina (102, 202) and the modified bituminous lamina (103, 203, 205) do not constitute the outermost lamina: as such the waterproofing membrane can be provided in the form of a roll which would be unfurled prior to utilization.

### The Adhesive Lamina (102, 202)

The adhesive lamina of the waterproofing membrane should typically have a thickness of from 0.1 to 2 mm, for example from 0.1 to 1.5 mm. The adhesive lamina is typically cast or otherwise obtained from a hot melt adhesive composition (AC) which comprises: a) bitumen; b) rubber crumb; c) at least one elastomer; d) plasticizer; and, optionally e) filler.

It is preferred that said hot melt adhesive composition (AC) comprises, based on the weight of the composition: from 40 to 80 wt.% of a) said bitumen; from 0.1 to 10 wt.% of b) said rubber crumb; from 1 to 15 wt.% of c) said at least one elastomer; from 1 to 20 wt.% of d) said plasticizer; and, from 0 to 30 wt.% of e) said filler.

In an embodiment, the hot melt adhesive composition (AC) comprises, based on the weight of the composition: from 50 to 80 wt.%, preferably from 55 to 75 wt.% of a) said bitumen; from 0.1 to 5 wt.%, preferably from 0.1 to 3 wt.% of b) said rubber crumb; from 2 to 15 wt.%, preferably from 2 to 10 wt.% of c) said at least one elastomer; from 5 to 20 wt.%, preferably from 5 to 15 wt.% of d) said plasticizer; and, from 5 to 30 wt.%, preferably from 10 to 25 wt.% of e) said filler.

Bitumen is defined by the U.S. Geological Survey as an extra-heavy oil with an American Petroleum Institute (API) gravity less than 10° and a viscosity as determined at 25°C of greater than 10,000 mPa.s. Bitumen can be derived from crude oil but equally exists as a natural deposit. There are minor differences existing in terms of composition between refined and naturally occurring bitumens but generally bitumen consists of about: 85 wt.% carbon; 10 wt.% hydrogen; heteroatoms in lesser amounts, such as nitrogen (0-2 wt. %), oxygen (0-2 wt. %) and sulphur; and, traces of metals, such as vanadium, iron and nickel.

Whilst the bitumen having utility in the hot melt adhesive composition (AC) could be of any grade that is suitable for waterproofing membrane applications, it is preferred that a) said bitumen has a penetration value of from 20 to 350 dmm, for example from 60 to 150 dmm as determined at 25°C in accordance with ASTM D-5.

As is known in the art, crumb rubber is a recycled rubber product made from grinding a source of used rubber into small particulates. Exemplary sources of used rubber include but are not limited to: end-of-life tyres; conveyor belts; rubber mats; and, rubber sound insulation or damping products. Prior to being comminuted, the sourced rubber is conventionally treated to remove metallic and fibrous impurities.

The rubber crumb having utility herein as constituent b) is preferably characterized by a particle size of from 0.1 to 2.0 mm, for example from 0.1 to 1.0 mm, as determined sieve analysis.

Suitable elastomers for inclusion as constituent c) of the hot melt adhesive composition (AC) include but are not limited to: natural rubber (NR); derivatives of natural rubber; ethylene-propylene-diene rubber (EPDM); ethylene propylene rubber (EPM); acrylonitrile-butadiene rubber (NBR); polychloroprene; styrene-butadiene block copolymers; styrene-butadiene rubber (SBR); styrene-butadiene-styrene rubber (SBS); butadiene rubber (BR); styrene-isoprene-styrene (SIS) copolymers; isoprene rubber (IR); styrene ethylene butylene styrene rubber (SEBS); rubbers based on copolymers of any two or more of styrene, butadiene, ethylene and isoprene; and, blends thereof.

In exemplary embodiments, the at least one elastomer is chosen from styrene-isoprene-styrene block copolymers, styrene-butadiene-styrene linear block copolymers, styrene-butadiene linear diblock copolymers, styrene-butadiene radial block copolymers and combinations thereof. It is preferred that the copolymers of these embodiments are characterized by a styrene content of from 10 to 45 wt.%, for example from 10 to 35 wt.%, based on the weight of the copolymer.

In a particularly preferred embodiment, constituent c) comprises: a styrene-butadiene-styrene linear block copolymer; a styrene-butadiene radial block copolymer having a styrene content of from 20 to 35 wt.% and a butadiene content of from 80 to 65 wt.%; or, a styrene-butadiene linear diblock copolymer having a styrene content of from 10 to 20 wt.% and a butadiene content of from 90 to 80 wt.%.

*A "plasticizer"* for the purposes of this disclosure is a substance that decreases the viscosity of the composition and thus facilitates its processability. The plasticizer of constituent d) of the hot melt adhesive composition (AC) is preferably selected from the group consisting of: diurethanes; ethers of monofunctional, linear or branched C4-C16 alcohols, such as Cetiol OE (obtainable from BASF); esters of abietic acid, butyric acid, thiobutyric acid, acetic acid, propionic acid esters and citric acid; esters based on nitrocellulose and polyvinyl acetate; fatty acids; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof.

In an embodiment, the plasticizer d) comprises mineral oil and in particular mineral oil having: a flash point of from 180 to 380°C; and, a viscosity of from 50 to 2000 mPa.s, as determined at 25°C in accordance with ASTM D445-24 Standard Test Method for Kinematic Viscosity of Transparent and Opaque Liquids (and Calculation of Dynamic Viscosity*).* Mineral oil included in the hot melt adhesive composition (AC) may be virgin mineral oil or may be recycled mineral oil which has been derived from other applications. Such recycled mineral oil may have been subjected to one or more separation processes to remove impurities therefrom which had been derived from a prior application.

In another embodiment, which is not mutually exclusive to the use of mineral oil above, the plasticizer d) comprises vegetable oil and in particular vegetable oil having: a flash point of at least 330°C; and, a viscosity of from 30 to 100 mPa.s, as determined at 25°C in accordance with ASTM D445-24 Standard Test Method for Kinematic Viscosity of Transparent and Opaque Liquids (and Calculation of Dynamic Viscosity*).* Exemplary vegetable oils include but are not limited to those derived from soybean oil, corn oil, cottonseed oil, palm oil, peanut oil, rapeseed oil, safflower oil, sunflower seed oil, sesame seed oil, rice bran oil, coconut oil, canola oil, and mixtures thereof. Vegetable oil included in the present composition may be: crude vegetable oil; refined vegetable oils, in particular degummed vegetable oils from which hydratable phosphatides have been removed; and, recycled vegetable which has been derived from other applications. Such recycled vegetable oil may have been subjected to one or more separation processes to remove impurities therefrom which had been derived from a prior application.

Broadly, there is no particular intention to limit the shape of the particles employed as fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as fillers. However, such fillers will conventionally have a median volume particle size (Dv50), as measured by laser diffraction, of from 0.1 to 1500 µm, for example from 1 to 1250 µm.

Exemplary fillers which may be included in constituent e) of the hot melt adhesive compositions include, but are not limited to, calcium carbonate, calcium oxide, calcium hydroxide (*lime powder*), precipitated and/or pyrogenic silica, zeolites, bentonites, wollastonite, pyroxenes, forsterite, magnesium carbonate, diatomite, barium sulfate, alumina, calcium aluminate, clay, talc, titanium oxide, iron oxide, zinc oxide, sand, quartz, flint, mica, glass beads, glass powder, and other ground mineral substances. Organic fillers can also be used, in particular wood fibers, wood flour, sawdust, cellulose, cotton, pulp, cotton, wood chips, chopped straw, chaff, ground walnut shells, rice husk fibers, flax fibers, and other chopped fibers. Short fibers such as glass fibers, glass filament, polyacrylonitrile, carbon fibers, Kevlar fibers, or polyethylene fibers can also be added.

The desired viscosity of the hot melt adhesive composition (AC) from which the adhesive lamina is formed may be determinative of the amount of filler used. Having regard to that latter consideration, the total amount of fillers present in the compositions should not prevent the composition from being readily applicable by the elected method of application of the composition to a substrate.

The hot melt adhesive composition may be formulated by bringing together the constituent ingredients in pre-determined amounts. In those embodiments where the ingredients are to be mixed, this may be performed using any of the mixing techniques known in the art: it would certainly be preferred however that the ingredients are not mixed by hand but are instead mixed by machine - a static or dynamic mixer, for example - in pre-determined amounts under anhydrous conditions.

A representative example of a mixing procedure involves first disposing the bitumen in a jacketed mixing kettle equipped with a rotor together with any plasticizer which is to be included in the adhesive composition. The resultant mixture in then heated to a temperature of from 180 to 200°C under high shear mixing until homogenous. The elastomers are then added under constant mixing at the aforementioned temperature until homogenously dispersed. Subsequently, whilst maintaining the stated temperature, the recycled ground rubber crumb is added using low shear mixing conditions until homogenously dispersed. Lastly, any filler is added gradually under constant mixing and a constant temperature of from 180 to 200°C. The final contents of the mixing kettle should be a consistent and homogenous mixture. The contents of the kettle may be protected with an inert gas, such as carbon dioxide or nitrogen, during the entire mixing process.

Generally, the hot melt adhesive composition may be applied to a substrate by conventional methods such as: brushing; knife coating; roll coating; slot-die coating; omega coating; control seam coating; dot coating; or, doctor-blade application. Central to any of the aforementioned methods of application is that the hot melt adhesive composition is sufficiently fluid upon application for it to coat the substrates to which it is applied. Thereby, useful application temperatures will typically range from 100 to 200°C, for instance from 120 to 200°C with lower temperatures within this range being preferred as they may extend the working life of the composition. Where applicable, the temperature of the composition may be raised above its mixing temperature to the application temperature using conventional means, including microwave induction.

It is recommended that the composition (AC) be applied to a wet film thickness of from 0.1 to 2 mm, for instance from 0.1 to 1.5 mm. Subsequent to its application, the composition is permitted to cool, which cooling may in certain embodiment be effected by contacting the coated substrate with cooling rollers.

### The Modified Bituminous Lamina(s) (104, 204, 206)

The or each modified bituminous lamina of the waterproofing membrane should typically have a thickness of from 0.1 to 2 mm, for example from 0.1 to 1.5 mm. The modified bituminous lamina is cast or otherwise obtained from a hot melt composition (MB) which comprises: i) bitumen; ii) rubber crumb; iii) at least one elastomer; iv) at least one plastomer; v) plasticizer; and, optionally vi) filler.

It is preferred that said hot melt composition (MB) comprises, based on the weight of the composition: from 40 to 80 wt.% of i) said bitumen; from 0.1 to 15 wt.% of ii) said rubber crumb; from 1 to 15 wt.% of iii) said at least one elastomer; from 1 to 15 wt.% of iv) said at least one plastomer; from 1 to 20 wt.% of v) said plasticizer; and, from 0 to 30 wt.% of vi) said filler.

In an embodiment, the hot melt composition (MB) comprises, based on the weight of the composition: from 40 to 75 wt.%, preferably from 45 to 60 wt.% of i) said bitumen; from 0.5 to 15 wt.%, preferably from 5 to 15 wt.% of ii) said rubber crumb; from 1 to 10 wt.%, preferably from 1 to 5 wt.% of iii) said at least one elastomer; from 1 to 10 wt.%, preferably from 1 to 5 wt.% of iv) said at least one plastomer; from 1 to 15 wt.%, preferably from 1 to 10 wt.% of v) said plasticizer; and, from 5 to 30 wt.%, preferably from 10 to 30 wt.% of vi) said filler.

Whilst the bitumen having utility in the hot melt composition (MB) could be of any grade that is suitable for waterproofing membrane applications, it is preferred that i) said bitumen has a penetration value of from 20 to 350 dmm, for example from 60 to 150 dmm as determined at 25°C in accordance with ASTM D-5.

As is known in the art, crumb rubber is a recycled rubber product made from grinding a source of used rubber into small particulates. Exemplary sources of used rubber include but are not limited to: end-of-life tyres; conveyor belts; rubber mats; rubber sound insulation or damping products. Prior to being comminuted, the sourced rubber is conventionally treated to remove metallic and fibrous impurities.

The rubber crumb having utility herein as constituent ii) is preferably characterized by a particle size of from 0.1 to 2.0 mm, for example from 0.1 to 1.0 mm, as determined sieve analysis.

Suitable elastomers for inclusion as constituent iii) of the hot melt composition (MB) include but are not limited to: natural rubber (NR); derivatives of natural rubber; ethylene-propylene-diene rubber (EPDM); ethylene propylene rubber (EPM); acrylonitrile-butadiene rubber (NBR); polychloroprene; styrene-butadiene block copolymers; styrene-butadiene rubber (SBR); styrene-butadiene-styrene rubber (SBS); butadiene rubber (BR); styrene-isoprene-styrene (SIS) copolymers; isoprene rubber (IR); styrene ethylene butylene styrene rubber (SEBS); rubbers based on copolymers of any two or more of styrene, butadiene, ethylene and isoprene; and, blends thereof.

In exemplary embodiments, the at least one elastomer is chosen from styrene-isoprene-styrene block copolymers, styrene-butadiene-styrene linear block copolymers, styrene-butadiene linear diblock copolymers, styrene-butadiene radial block copolymers, and blends thereof. **It** is preferred that the copolymers of these embodiment are characterized by a styrene content of from 10 to 45 wt.%, for example from 10 to 35 wt.%, based on the weight of the copolymer.

In a particular preferred embodiment, constituent iii) comprises: a styrene-butadiene-styrene linear block copolymer; a styrene-butadiene radial block copolymer having a styrene content of from 20 to 35 wt.% and a butadiene content of from 80 to 65 wt.%; and, a styrene-butadiene linear diblock copolymer having a styrene content of from 10 to 20 wt.% and a butadiene content of from 90 to 80 wt.%.

The or each plastomer of the composition (MB) may be characterized by at least one of: a weight average molecular weight of from 5000 to 50000 daltons, preferably from 10000 to 50000 daltons; a melt flow index of at least 50 dg/min, preferably from 50 to 200 dg/min, as determined in accordance with ASTM D1238-*10 Standard Test Method for Melt Flow Rates of Thermoplastics by Extrusion Plastometer;* and, a density of from 0.85 to 1.05 g/cm³, preferably from 0.90 to 1.00 g/cm³. These characterizations are not mutually exclusive and one, two or three thereof may apply.

Exemplary plastomers having utility as constituent iv), either alone or in combination, include ethylene/alpha-olefin copolymers. It is preferred that constituent iv) comprises at least one copolymer of ethylene with a C₃-C₂₀ alpha-olefin, wherein said C₃-C₂₀ alpha-olefin constitutes from 5 to 30 mole percent of the copolymer. More particularly, constituent iv) may comprise at least one copolymer of ethylene with a C₄-C₈ alpha-olefin, wherein said C₄-C₈ alpha-olefin constitutes from 5 to 30 mole percent of the copolymer. Desirably such copolymers have been polymerized in a linear fashion using, for instance a single site metallocene catalyst.

**It** is noted that as-synthesized plastomers, recycled plastomers and combinations thereof may have utility in the hot melt composition (MB). The use of recycled plastomers is particularly desirable.

The plasticizer of constituent v) of the hot melt composition (MB) is preferably selected from the group consisting of: diurethanes; ethers of monofunctional, linear or branched C4-C16 alcohols, such as Cetiol OE (obtainable from BASF); esters of abietic acid, butyric acid, thiobutyric acid, acetic acid, propionic acid esters and citric acid; esters based on nitrocellulose and polyvinyl acetate; fatty acids; fatty acid esters; dicarboxylic acid esters; esters of OH-group-carrying or epoxidized fatty acids; glycolic acid esters; benzoic acid esters; phosphoric acid esters; sulfonic acid esters; trimellitic acid esters; polyether plasticizers, such as end-capped polyethylene or polypropylene glycols; polystyrene; hydrocarbon plasticizers; chlorinated paraffin; and, mixtures thereof.

In an embodiment, the plasticizer v) comprises mineral oil and in particular mineral oil having: a flash point of from 180 to 380°C; and, a viscosity of from 50 to 2000 mPa.s, as determined in accordance with ASTM D445-24 Standard Test Method for Kinematic Viscosity of Transparent and Opaque Liquids (and Calculation of Dynamic Viscosity*).* Mineral oil included in the present composition may be virgin mineral oil or may be recycled mineral oil which has been derived from other applications. Such recycled mineral oil may have been subjected to one or more separation processes to remove impurities therefrom which had been derived from a prior application.

In another embodiment, which is not mutually exclusive to the use of mineral oil above, the plasticizer comprises vegetable oil and in particular vegetable oil having: a flash point of at least 330°C; and, a viscosity of from 30 to 100 mPa.s, as determined in accordance with ASTM D445-24 Standard Test Method for Kinematic Viscosity of Transparent and Opaque Liquids (and Calculation of Dynamic Viscosity*).* Exemplary vegetable oils include but are not limited to those derived from soybean oil, corn oil, cottonseed oil, palm oil, peanut oil, rapeseed oil, safflower oil, sunflower seed oil, sesame seed oil, rice bran oil, coconut oil, canola oil, and mixtures thereof. Vegetable oil included in the present composition may be: crude vegetable oil; refined vegetable oils, in particular degummed vegetable oils from which hydratable phosphatides have been removed; and, recycled vegetable which has been derived from other applications. Such recycled vegetable oil may have been subjected to one or more separation processes to remove impurities therefrom which had been derived from a prior application.

Broadly, there is no particular intention to limit the shape of the particles employed as fillers: particles that are acicular, spherical, ellipsoidal, cylindrical, bead-like, cubic or platelet-like may be used alone or in combination. Moreover, it is envisaged that agglomerates of more than one particle type may be used. Equally, there is no particular intention to limit the size of the particles employed as fillers. However, such fillers will conventionally have a median volume particle size (Dv50), as measured by laser diffraction, of from 0.1 to 1500 µm, for example from 1 to 1250 µm.

Exemplary fillers which may be included in constituent vi) of the hot melt adhesive compositions include, but are not limited to, calcium carbonate, calcium oxide, calcium hydroxide *(lime powder),* precipitated and/or pyrogenic silica, zeolites, bentonites, wollastonite, pyroxenes, forsterite, magnesium carbonate, diatomite, barium sulfate, alumina, calcium aluminate, clay, talc, titanium oxide, iron oxide, zinc oxide, sand, quartz, flint, mica, glass beads, glass powder, and other ground mineral substances. Organic fillers can also be used, in particular wood fibers, wood flour, sawdust, cellulose, cotton, pulp, cotton, wood chips, chopped straw, chaff, ground walnut shells, rice husk fibers, flax fibers, and other chopped fibers. Short fibers such as glass fibers, glass filament, polyacrylonitrile, carbon fibers, Kevlar fibers, or polyethylene fibers can also be added.

The desired viscosity of the hot melt composition (MB) from which the lamina(e) is formed may be determinative of the amount of filler used. Having regard to that latter consideration, the total amount of fillers present in the compositions should not prevent the composition from being readily applicable by the elected method of application of the composition to a substrate.

The hot melt composition (MB) may be formulated by bringing together the constituent ingredients in pre-determined amounts. In those embodiments where the ingredients are to be mixed, this may be performed using any of the mixing techniques known in the art: it would certainly be preferred however that the ingredients are not mixed by hand but are instead mixed by machine - a static or dynamic mixer, for example - in pre-determined amounts under anhydrous conditions.

A representative example of a mixing procedure involves first disposing the bitumen in a jacketed mixing kettle equipped with a rotor together with any plasticizer which is to be included in the adhesive composition. The resultant mixture in then heated to a temperature of from 180° to 200°C under high shear mixing until homogenous. The elastomers and the plastomers are then added under constant mixing at the aforementioned temperature until homogenously dispersed. Subsequently, whilst maintaining the stated temperature, the recycled ground rubber crumb is added using low shear mixing conditions until homogenously dispersed. Lastly, any filler is added gradually under constant mixing and a constant temperature of from 180 to 200°C. The final contents of the mixing kettle should be a consistent and homogenous mixture. The contents of the kettle may be protected with an inert gas, such as carbon dioxide or nitrogen, during the entire mixing process.

Generally, the hot melt composition (MB) may be applied to a substrate by conventional methods such as: brushing; knife coating; roll coating; slot-die coating; omega coating; control seam coating; dot coating; or, doctor-blade application. Central to any of the aforementioned methods of application is that the hot melt adhesive composition is sufficiently fluid upon application for it to coat the substrates to which is applied. Thereby, useful application temperatures will typically range from 100 to 200°C, for instance from 120 to 200°C with lower temperatures within this range being preferred as they may extend the working life of the composition. Where applicable, the temperature of the composition (MB) may be raised above its mixing temperature to the application temperature using conventional means, including microwave induction.

It is recommended that the hot melt composition (MB) be applied to a wet film thickness of from 0.1 to 2 mm, for instance from 0.1 to 1.5 mm. Subsequent to its application, the composition is permitted to cool, which cooling may in certain embodiment be effected by contacting the coated substrate with cooling rollers.

### Use of the Waterproofing Membrane

Referring back to Figures 1 and 2, upon removal of the illustrated release liner (101, 201), the waterproofing membrane (10, 20) may be applied to a construction material via the adhesive lamina (102, 202) thereof. The waterproofing membrane may need to be pressed onto the surface using manual pressure or an appropriate device, such as a roller.

There is no particular intention to limit the construction materials to which the membrane (10, 20) may be applied to provide waterproofing and damp proofing: exemplary constructions materials include but are not limited to wood, plywood, particle board, hardboard, pressboard, chipboard, fiberboard, strandboard, plaster, stucco, tile, cement render, mortar and concrete. There is equally no intention to limit the orientation or surface structure of the materials to which the membrane may be applied. The membrane may for instance be applied to vertically or horizontally disposed surfaces and, moreover, may be applied to uneven or irregular surfaces given that the flexibility of the membrane should permit conformity to such surfaces.

Prior to the adhesion of the waterproofing membrane, it is often advisable to pre-treat the relevant surfaces. Any such pre-treatment should comprise at least one of: cleaning the surface(s); smoothing the surface(s); applying an anti-corrosion coating; or, applying a conversion coating or conversion treatment thereto.

Cleaning serves to remove foreign matter from the surface. Cleaning treatments are known in the art and can be performed in a single or multi-stage manner constituted by, for instance, the use of one or more of: immersion in a waterborne alkaline degreasing bath; treatment with a waterborne cleaning emulsion; treatment with a cleaning solvent, such as carbon tetrachloride or trichloroethylene; wiping the surface with a dry wipe; wiping the surface with a wet wipe which has been moistened with a cleaning solution; and, water rinsing, typically with deionized or demineralized water.

Independently of, or additional to such cleaning, smoothing of the surface may be performed to remove sharp features which might tear or otherwise compromise the membrane. The surface may, in particular, be sanded and, optionally, feather-edged to accommodate the waterproofing membrane. Both sanding and feather-edging may be effected using, for instance, an orbital sander having sandpaper of a pre-determined grit. After sanding, the defect area may optionally be cleaned again to remove any dust generated during the sanding operation or any other acquired dirt or contaminants.

The terms *"conversion coating"* and *"conversion treatment"* refer to a treatment of the surface of a substrate which causes the surface material to be chemically converted to a different material. Typically, a metal or alloyed surface substrate, presenting a defect area for refinishing, is chemically treated to provide a tightly adherent conversion coating, all or part of which consists of a stabilized form - for instance an oxidized form - of the substrate metal. Such chemical conversion coatings can demonstrate high corrosion resistance as well as providing a strong bonding affinity for subsequent coating layers.

The following examples are illustrative of the present invention and are not intended to limit the scope of the invention in any way.

### EXAMPLES

The components used in the examples are according to the preferred embodiments as mentioned above.

The facer film used in the examples is a cross laminated high density polyethylene film with anti-slip properties. It is made up of two layers of high-strength PE film which are cross-composited by 45 degrees. It has thickness of 100 to 115 microns, and unit weight per area of 93 to 113 g/m2. The film used in the example is supplied by Weifang Tecrown New Materials Limited Co.

The primer used in the examples is a solvent-based bituminous primer that is a low viscous primer to improve the adhesion of bitumen-based membranes and coatings, as used in this case under tradename of Polyprime SB supplied by Henkel Polybit Industries Ltd.

The following tests were then performed on the inventive and comparative bituminous compositions described below.

Softening Point: This parameter was determined in accordance with ASTM36-0: *Standard Test Method for Softening Point of Bitumen (Ring-and-Ball Apparatus).*

Viscosity: This parameter was determined at 180°C and 50% relative humidity in accordance with ASTM *D4402:06: Standard Test Method for Viscosity Determination of Asphalt at Elevated Temperatures Using a Rotational Viscometer.*

Penetration Resistance: This parameter (dmm, *decimillimeter)* was determined at 25°C in accordance with ASTM D5-06: *Standard Test Method for Penetration of Bituminous Materials.*

Low Temperature Flexibility: This parameter (°C) was determined in accordance with ASTM D1970 *Standard Specification for Self-Adhering Polymer Modified Bituminous Sheet Materials Used* as *Steep Roofing Underlayment for Ice Dam Protection.*

Adhesion Tests: Adhesion to a steel substrate at room temperature and self-adhesion at room temperature were evaluated in accordance with ASTM D1000-17 *Standard Test Methods for Pressure-Sensitive Adhesive-Coated Tapes Used for Electrical and Electronic Applications.*

Coefficients of Friction: Static and kinetic coefficients of friction were determined in accordance with ASTM D1894: *Standard Test Method for Static and Kinetic Coefficients of Friction of Plastic Film and Sheeting.*

Melt Flow Index: This parameter was determined in accordance with ASTM D1238 Standard Test Method for Melt Flow Rates of Thermoplastics by Extrusion Plastometer either by Procedure A or Procedure B. Procedure A is based on the measurement of the mass of material that extrudes from the die over a given period of time. It is generally used for materials having melt flow rates that fall between 0.15 and 50 g/10 min. Procedure B is an automatically timed measurement used to determine the melt flow rate (MFR) as well as the melt volume rate (MVR) of thermoplastic materials. MFR measurements made with Procedure B are reported in g/10 min. MVR measurements are reported in cubic centimeters/10 min (cm3/10 min). Procedure B measurements are based on the determination of the volume of material extruded from the die over a given period of time. Procedure B is generally used with materials having melt flow rates from 0.50 to 1500 g/10 min.

### Example 1

A modified bituminous composition, suitable for inclusion as layer (104), layer (204) or layer (206) as depicted in the waterproofing membranes of Figures 1 and 2, was prepared in accordance with Table 1 herein below. The ingredients of a reference bituminous composition are also provided therein.

**Table 1**

| **Raw Material** | **Reference Modified Bituminous Composition (wt.%)** | **Inventive Modified Bituminous Composition (wt.%)** |
|---|---|---|
| Bitumen | 59.5 | 52.0 |
| Recycled Mineral Oil | 3.0 | 3.0 |
| Vegetable Oil | 0 | 1.0 |
| Recycle Rubber Crumb | 0.5 | 11.0 |
| Elastomer | 2.0 | 2.0 |
| Recycled Plastomer | 0 | 4.0 |
| Filler | 35.0 | 27.0 |

To form each of the tabulated compositions, bitumen and the plasticizing oils were first disposed in a jacketed mixing kettle equipped with a rotor together. The resultant mixture in then heated to 180°C under high shear (8000 rpm) mixing until homogenous. The elastomer and plastomer were then added under constant mixing at the aforementioned temperature until homogenously dispersed. Subsequently, whilst maintaining the stated temperature, the recycled ground rubber crumb was added using low shear (90 - 100 rpm) mixing conditions until homogenously dispersed. Lastly, filler was added gradually under constant mixing and a constant temperature of 180°C.

The results of the above tests performed on the comparative and inventive modified bituminous compositions are provided in Table 2 below.

**Table 2**

| **Properties** | **Reference Modified Bituminous Composition** | **Inventive Modified Bituminous Composition** |
|---|---|---|
| Softening Point (°C) | 67 | 111 |
| Low Temperature Flexibility (°C) | +5 | -5 |
| Penetration Resistance (dmm) | 32 | 41 |
| Viscosity (mPa.s) | 400 | 4400 |
| Coefficient of Friction: Static | 0.32 | > 0.70 |
| Coefficient of Friction: Kinetic | 0.29 | > 0.70 |

The reference composition shows lower coefficient of friction values, reduced low temperature flexibility and a lower softening point as compared to the inventive composition.

### Example 2

An adhesive composition in accordance with the present disclosure and two comparative compositions were prepared in accordance with Table 3 herein below.

**Table 3**

| **Raw Material** | **Comparative Adhesive Composition 1 (wt.%)** | **Comparative Adhesive Composition 2 (wt.%)** | **Inventive Adhesive Composition 1 (wt.%)** |
|---|---|---|---|
| Bitumen | 45.0 | 45.0 | 64.0 |
| Recycled Mineral Oil | 5.0 | 25.0 | 9.0 |
| Vegetable Oil | 0.0 | 0.0 | 2.0 |
| Elastomer | 5.0 | 5.0 | 5.0 |
| Recycle Rubber Crumb | 10.0 | 10.0 | 0.5 |
| Filler | 35.0 | 15.0 | 19.5 |

To form each of the tabulated compositions, bitumen and the plasticizing oils were first disposed in a jacketed mixing kettle equipped with a rotor together. The resultant mixture in then heated to 180°C under high shear (8000 rpm) mixing until homogenous. The elastomers were then added under constant mixing at the aforementioned temperature until homogenously dispersed. Subsequently, whilst maintaining the stated temperature, the recycled ground rubber crumb was added using low shear (90 - 100 rpm) mixing conditions until homogenously dispersed. Lastly, filler was added gradually under constant mixing and a constant temperature of 180°C.

The results of the above tests performed on the comparative and inventive adhesive compositions are provided in Table 4 below.

**Table 4:**

| **Properties** | **Comparative Adhesive Composition 1** | **Comparative Adhesive Composition 2** | **Inventive Adhesive Composition 1** |
|---|---|---|---|
| Softening Point (°C) | 116 | 80 | 110 |
| Penetration Resistance (dmm) | 30 | 100 | 83 |
| Adhesion strength on primed substrate (N/mm) | 0.17 | 0.57 | 4.50 |
| Adhesion strength on Self (N/mm) | 0 (*No adhesion*) | 0.86 | 3.15 |
| Low Temperature Flexibility (°C) | -5 | -25 | -10 |
| Viscosity (mPa.s) | 35200 | 2100 | 800 |

The inventive adhesive composition shows high adhesion strength to both the primed substrate and to itself. The low processing viscosity of this composition is also considered to be beneficial as it facilitates levelling on any substrates to which the composition is applied.

In view of the foregoing description and examples, it will be apparent to those skilled in the art that equivalent modifications thereof can be made without departing from the scope of the claims.

## Claims

1. A multilaminate waterproofing membrane comprising:
a release liner having an interior surface and an exterior surface, said exterior surface of the release liner providing a first exterior surface of the waterproofing membrane;
a protective surface film having an interior surface and an exterior surface, said exterior surface of the protective surfacing film providing a second exterior surface of the waterproofing membrane;
an adhesive lamina disposed on the interior surface said release liner, said adhesive lamina comprising:
a) bitumen;
b) rubber crumb;
c) at least one elastomer;
d) plasticizer; and,
optionally e) filler.
a first barrier film disposed on said adhesive lamina; and,
a first modified bitumen lamina interposed between said first barrier film and said interior surface of the protective surfacing film.

2. The multilaminate waterproofing membrane according to claim 1, comprising
a release liner having an interior surface and an exterior surface, said exterior surface of the release liner providing a first exterior surface of the waterproofing membrane;
a protective surface film having an interior surface and an exterior surface, said exterior surface of the protective surfacing film providing a second exterior surface of the waterproofing membrane;
an adhesive lamina disposed on the interior surface said release liner, said adhesive lamina comprising:
a) bitumen;
b) rubber crumb;
c) at least one elastomer;
d) plasticizer; and,
optionally e) filler;
a first barrier film disposed on said adhesive lamina;
a first modified bitumen lamina disposed on said first barrier film;
a second barrier film disposed on said first modified bitumen lamina; and,
a second modified bitumen lamina interposed between said second barrier film and said interior surface of the protective surfacing film.

3. The multilaminate waterproofing membrane according to claim 1 or claim 2 **characterized by** at least one of the following:
a total thickness of from 1 to 10 mm;
a penetration resistance of at least 25 dmm *(decimillimeter),* as determined at 25°C in accordance with ASTM D5-06; and,
a puncture resistance of at least 200 Newtons, as determined in accordance with European Standard DIN EN 388.

4. The multilaminate waterproofing membrane according to any one of claims 1 to 3, wherein said release liner has a thickness of from 20 to 120 microns and comprises at least one material chosen from: polyethylene; polypropylene; polyesters; cellulose acetate; polyvinylchloride; polyvinylidene fluoride; and, paper.

5. The multilaminate waterproofing membrane according to any one of claims 1 to 4, wherein said protective surface film has a thickness of from 50 to 100 microns and comprises at least one material chosen from: polymeric films; metal foils; foams; non-woven fabric; woven fabric; and, mixtures thereof.

6. The waterproofing membrane according to any one of claims 1 to 5, wherein said adhesive lamina is obtained from a hot-melt adhesive composition (AC) comprising, based on the weight of the composition:
from 40 to 80 wt.% of a) said bitumen;
from 0.1 to 10 wt.% of b) said rubber crumb;
from 1 to 15 wt.% of c) said at least one elastomer;
from 1 to 20 wt.% of d) said plasticizer; and,
from 0 to 30 wt.% of e) said filler.

7. The waterproofing membrane according to any one of claims 1 to 6, wherein a) said bitumen has a penetration value of from 20 to 350 dmm as determined at 25°C in accordance with ASTM D-5.

8. The waterproofing membrane according to any one of claims 1 to 7, wherein d) said plasticizer of the adhesive lamina comprises mineral oil having: a flash point of from 180 to 380°C; and, a viscosity of from 50 to 2000 mPa.s, as determined at 25°C in accordance with ASTM D445-24.

9. The waterproofing membrane according to any one of claims 1 to 8, wherein d) said plasticizer of the adhesive lamina comprises vegetable oil having: a flash point of at least 330°C; and, a viscosity of from 30 to 100 mPa.s, as determined at 25°C in accordance with ASTM D445-24.

10. The waterproofing membrane according to any one of claims 1 to 9, wherein the or each modified bituminous lamina comprises:
i) bitumen;
ii) rubber crumb;
iii) at least one elastomer;
iv) at least one plastomer;
v) plasticizer; and,
optionally vi) filler.

11. The waterproofing membrane according to claim 10, wherein the or each modified bituminous lamina is obtained from a hot-melt composition (MB) comprising, based on the weight of the composition:
from 40 to 80 wt.% of i) said bitumen;
from 0.1 to 15 wt.% of ii) said rubber crumb;
from 1 to 15 wt.% of iii) said at least one elastomer;
from 1 to 15 wt.% of iv) said at least one plastomer;
from 1 to 20 wt.% of v) said plasticizer; and,
from 0 to 30 wt.% of vi) said filler.

12. The waterproofing membrane according to any one of claims 10 to 11, wherein i) said bitumen has a penetration value of from 20 to 350 dmm as determined at 25°C in accordance with ASTM D-5.

13. The waterproofing membrane according to any one of claims 10 to 12, wherein v) said plasticizer comprises mineral oil having: a flash point of from 180 to 380°C; and, a viscosity of from 50 to 2000 mPa.s, as determined at 25°C in accordance with ASTM D445-24.

14. The waterproofing membrane according to any one of claims 10 to 13, wherein v) said plasticizer comprises vegetable oil having: a flash point of at least 330°C; and, a viscosity of from 30 to 100 mPa.s, as determined at 25°C in accordance with ASTM D445-24.

15. Use in a multilaminate waterproofing membrane of an adhesive lamina, wherein said adhesive lamina is obtained from a hot-melt adhesive composition (AC) comprising, based on the weight of the composition:
from 40 to 80 wt.% of a) said bitumen;
from 0.1 to 10 wt.% of b) said rubber crumb;
from 1 to 15 wt.% of c) said at least one elastomer;
from 1 to 20 wt.% of d) said plasticizer; and,
from 0 to 30 wt.% of e) said filler.
